**Europäisches Patentamt**

**European Patent Office**

**Office européen des brevets**

(19)

(11) Veröffentlichungsnummer: **0 347 647**

**A1**

(12) # EUROPÄISCHE PATENTANMELDUNG

(21) Anmeldenummer: **89110313.7**

(22) Anmeldetag: **07.06.89**

(51) Int. Cl.⁴: **G03B 42/04**

(30) Priorität: **21.06.88 DE 8807986 U**

(43) Veröffentlichungstag der Anmeldung:
**27.12.89 Patentblatt 89/52**

(84) Benannte Vertragsstaaten:
**BE DE FR GB**

(71) Anmelder: **Siemens Aktiengesellschaft**
**Wittelsbacherplatz 2**
**D-8000 München 2(DE)**

(72) Erfinder: **Finkenzeller, Johann**
**Herringstrasse 8**
**D-8520 Erlangen(DE)**
Erfinder: **Hubert, Günter**
**Wellerstädterweg 28**
**D-8523 Baiersdorf(DE)**

(54) **Röntgenkassette für einen Speicherleuchtschirm.**

(57) Die Erfindung betrifft eine Röntgenkassette für einen Speicherleuchtschirm (1) für die latente Speicherung von Röntgenstrahlenbildern, mit einem Gehäuse (3 bis 5) und einem Deckel (2), der aus einem flexiblen, ferromagnetischen Werkstoff besteht, an dem der Speicherleuchtschirm (1) angebracht ist. Das Gehäuse (3 bis 5) besteht zumindest bereichsweise aus einem ferromagnetischen Material. Der Deckel (2) und/oder das Gehäuse (3 bis 5) sind magnetisiert.

FIG 1

EP 0 347 647 A1

## Röntgenkassette für einen Speicherleuchtschirm

Die Erfindung betrifft eine Röntgenkassette für einen Speicherleuchtschirm für die latente Speicherung von Röntgenstrahlenbildern, mit einem Gehäuse und einem Deckel.

In der US-A-4,521,904 ist eine derartige Kassette beschrieben, bei der in einem lichtdichten Gehäuse, das aus einem Bodenteil und einem Deckel besteht, die mit federnden Schichten ausgekleidet sind, ein Röntgenfilm und eine Folie eines Speicherleuchtschirmes eingelegt sind. Die Röntgenkassette entspricht dabei einer normalen Röntgenfilmkassette, bei der die Filme in die Kassette eingelegt werden und der mittels Scharnier befestigte Deckel zu verschließen ist.

Aus der DE-A-1 112 887 ist eine Röntgenfilmkassette bekannt, bei der der Deckel aus einem flexiblen, magnetischen Material besteht, und der in die Kassette lose eingelegte Röntgenfilm durch magnetische Kraft auf den Kassettenboden gepreßt wird.

In der EP-A-0 098 596 ist ein Speicherleuchtschirm beschrieben, der einen zweischichtigen Aufbau aufweist. In der ersten Schicht ist der Speicherleuchtstoff enthalten, während die zweite Schicht aus einem magnetischen Material besteht. Dieses dient dazu, bei einer Abtastvorrichtung für den Speicherleuchtschirm diesen durch magnetische Kraft zu halten, so daß er von beweglichen Transportmitteln, beispielsweise einen Riemen, fortbewegt werden kann.

Die Erfindung geht von der Aufgabe aus, eine Röntgenkassette für einen Speicherleuchtschirm der eingangs genannten Art zu schaffen, die eine einfache Handhabung der Kassette als auch bei der Auslesung des Speicherleuchtstoffes gewährleistet.

Die Aufgabe wird erfindungsgemäß dadurch gelöst, daß der Deckel aus einem flexiblen, ferromagnetischen Werkstoff besteht, an dem der Speicherleuchtschirm angebracht ist, daß das Gehäuse zumindest bereichsweise aus einem ferromagnetischen Material besteht, und daß der Deckel und/oder das Gehäuse magnetisiert sind. Durch diese Anordnung der Röntgenkassette wird gewährleistet, daß mit Schließen des Deckels der Speicherleuchtschirm gleichzeitig in die Kassette eingefügt wird. Bei Öffnen der Kassette wird ebenfalls der Speicherleuchtschirm der Kassette entnommen. Anschließend läßt sich der Deckel mit angebrachtem Speicherleuchtschirm in eine bekannte Auslesevorrichtung mit magnetischen Transportmitteln einführen. Dadurch erhält man einen einfachen Aufbau der Kassette und des in der entsprechenden Auslesevorrichtung verwendeten Speicherschirmes, da der Deckel gleichzeitig die Schicht aus ferromagnetischem Material des Speicherleuchtschirmes darstellt.

Einen sicheren Verschluß und lichtdichten Aufbau der Kassette erhält man, wenn das Gehäuse einen Kassettenboden und einen diesen Kassettenboden umgreifenden Kassettenrahmen aufweist und wenn ein Magnetrahmen in das Gehäuses eingesetzt ist. Ein sicheres Schließen des Deckels wird erreicht, wenn der Deckel den Speicherleuchtschirm seitlich überragt. Eine sichere Halterung des Speicherleuchtschirmes wird erreicht, wenn die Öffnung des Magnetrahmens die Größe des Speicherleuchtschirmes aufweist, so daß der Deckel auf dem Magnetrahmen aufliegt. Dadurch wird ein sicherer und lichtdichter Verschluß erreicht.

Ein leichter Aufbau der Röntgenkassette wird erreicht, wenn der Kassettenrahmen und der Magnetrahmen aus Kunststoff bestehen, wobei in dem Magnetrahmen · Permanentmagnete eingelassen sind. Ein stabiler Aufbau der Kassette wird erreicht, wenn der Kassettenboden aus Kohlefaserstoffen besteht. Der Deckel weist ebenfalls einen stabilen Aufbau auf, wenn er aus Stahlblech besteht, das mit einer Folie überzogen ist.

Die Erfindung wird nachfolgend anhand eines in der Zeichnung dargestellten Ausführungsbeispiels näher erläutert. Es zeigen:

FIG 1 eine erfindungsgemäße Röntgenkassette mit Deckel und Gehäuse und

FIG 2 eine geschnittene Darstellung der geschlossenen Röntgenkassette gemäß FIG 1.

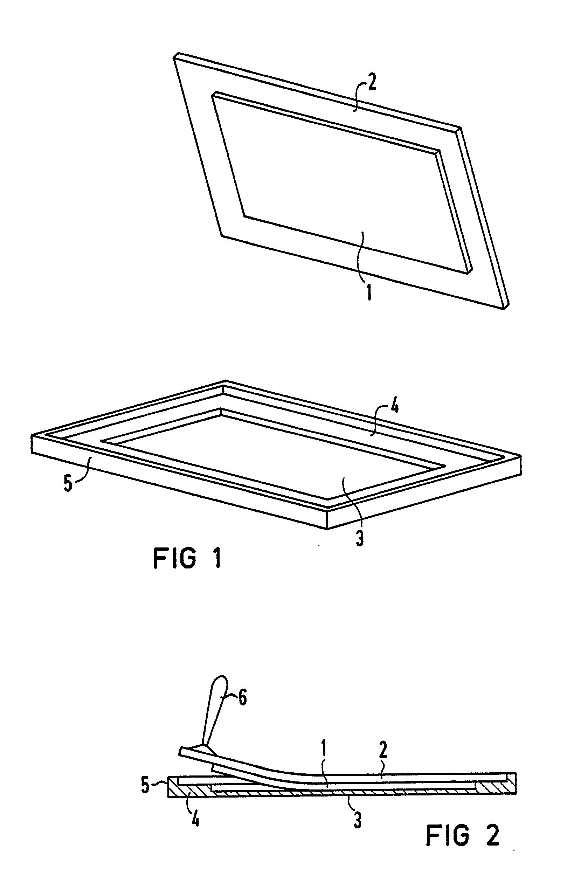

In der FIG 1 ist eine geöffnete Röntgenkassette dargestellt, die aus einem Deckel 2 aus einem flexiblen, ferromagnetischen Werkstoff und einem Gehäuse besteht, das einen Kassettenboden 3, einen Magnetrahmen 4 und einen diesen Magnetrahmen 4 umgreifenden Kassettenrahmen 5 umfaßt. An dem Deckel 2 ist ein Speicherleuchtschirm 1 beispielsweise durch Klebung fest angebracht. Der Magnetrahmen 4 weist eine Öffnung auf, die der Größe des Speicherleuchtschirmes 1 entspricht, so daß der Deckel 2 voll auf dem Magnetrahmen 4 aufliegt, während der Speicherleuchtschirm 1 sich innerhalb der Öffnung des Magnetrahmens 4 befindet. Dadurch wird erreicht, daß zum einen der Deckel 2 flach aufliegen kann und zum anderen man dadurch einen lichtdichten Verschluß erhält.

In FIG 2 ist die Röntgenkassette im Querschnitt dargestellt. Zur Öffnung der Röntgenkassette läßt sich ein auf dem Umfang des Deckels 2 angesetzter Sauger 6 verwenden, der den flexiblen Deckel 2 von der einen Seite löst und anhebt, so daß der Deckel 2 vollständig vom Gehäuse 3 bis 5 abgenommen werden kann. Das Öffnen kann dabei maschinell oder von Hand erfolgen. Anschließend läßt sich dieser Deckel 2 zusammen mit dem Speicherleuchtschirm 1 in eine Abtastvorrichtung gemäß der EP-A-0 098 596 einführen, so daß die Abtastung des Speicherleuchtschirmes 1 erfolgen kann. Nach erfolgter Abtastung läßt sich der Deckel 2 samt Speicherleuchtschirm 1 wiederum in das Gehäuse einfügen, so daß die Röntgenkassette weiter verwendet werden kann.

Als flexibler, ferromagnetischer Werkstoff für den Deckel 2 läßt sich beispielsweise ein dünnes Stahlblech verwenden, das zum Schutz mit einer Folie überzogen ist. Als Material für den Kassettenboden 3 eignen sich wegen ihrer Stabilität Kohlefaserwerkstoffe. An diesem Kassettenboden 3 kann der Kassettenrahmen 5 aus Kunststoff angegossen sein. Der eingelegte Magnetrahmen 4 kann ebenfalls aus Kunststoff bestehen, in dem Permanentmagnete eingelassen sind. Der Magnetrahmen 4 und der Kassettenrahmen 5 können aber auch als eine Einheit direkt an den Kassettenboden 3 gegossen oder gespritzt werden. Die Bestrahlung des Speicherleuchtschirmes 1 einer derartigen Röntgenkassette erfolgt dabei durch den Kassettenboden 3.

Es läßt sich aber auch der Deckel 2 aus magnetischem Material, beispielsweise aus in Gummi gebetteten Permanentmagneten, herstellen, so daß das Gehäuse oder der Rahmen 4 aus Stahlblech oder aus mit einer Eisenfolie beschichtetem Kunststoff erstellt sein kann.

## Ansprüche

1. Röntgenkassette für einen Speicherleuchtschirm (1) für die latente Speicherung von Röntgenstrahlenbildern mit einem Gehäuse (3 bis 5) und einem Deckel (2), **dadurch gekennzeichnet,** daß der Deckel (2) aus einem flexiblen, ferromagnetischen Werkstoff besteht, an dem der Speicherleuchtschirm (1) angebracht ist, daß das Gehäuse (3 bis 5) zumindest bereichsweise aus einem ferromagnetischen Material besteht, und daß der Deckel (2) und/oder das Gehäuse (3 bis 5) magnetisiert sind.

2. Röntgenkassette nach Anspruch 1, **dadurch gekennzeichnet,** daß das Gehäuse (3 bis 5) einen Kassettenboden (3) und einen diesen Kassettenboden (3) umgreifenden Kassettenrahmen (5) aufweist und daß ein Magnetrahmen (4) in das Gehäuse (3 bis 5) eingesetzt ist.

3. Röntgenkassette nach Anspruch 1 oder 2, **dadurch gekennzeichnet,** daß der Deckel (2) den Speicherleuchtschirm (1) seitlich überragt.

4. Röntgenkassette nach Anspruch 2 oder 3, **dadurch gekennzeichnet,** daß die Öffnung des Magnetrahmens (4) die Größe des Speicherleuchtschirmes (1) aufweist, so daß der Deckel (2) auf dem Magnetrahmen (4) aufliegt.

5. Röntgenkassette nach einem der Ansprüche 2 bis 4, **dadurch gekennzeichnet,** daß der Kassettenrahmen (5) aus Kunststoff besteht.

6. Röntgenkassette nach einem der Ansprüche 2 bis 5, **dadurch gekennzeichnet,** daß der Magnetrahmen (4) aus Kunststoff besteht, in dem Permanentmagnete eingelassen sind.

7. Röntgenkassette nach einem der Ansprüche 2 bis 6, **dadurch gekennzeichnet,** daß der Kassettenboden (3) aus Kohlefaserstoffen besteht.

8. Röntgenkassette nach einem der Ansprüche 1 bis 7, **dadurch gekennzeichnet,** daß der Deckel (2) aus Stahlblech besteht, das mit einer Folie überzogen ist.

FIG 1

FIG 2

# EUROPÄISCHER RECHERCHENBERICHT

**Europäisches Patentamt**

Nummer der Anmeldung

EP 89 11 0313

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 704 369 (R.L. PAIDOSH) * Spalte 2, Zeile 42 - Spalte 3, Zeile 15; Spalte 3, Zeile 48 - Spalte 4, Zeile 48; Figur 1 * | 1 | G 03 B 42/04 |
| A | --- | 3,5,8 | |
| Y | EP-A-0 219 821 (FUJI PHOTO FILM CO., LTD) * Seite 20, Absatz 2; Figur 5 * | 1 | |
| A | US-A-4 013 890 (R.M. CONRAD) * Spalte 1, Zeile 61 - Spalte 3, Zeile 61; Figuren * | 1-6 | |
| A | US-A-4 638 501 (Y. NISHI et al.) * Spalte 1, Zeile 53 - Spalte 2, Zeile 2 * | 7 | |

| | | | RECHERCHIERTE SACHGEBIETE (Int. Cl.4) |
|---|---|---|---|
| | | | G 01 T 1/29 G 03 B 42/02 G 03 B 42/04 |

Der vorliegende Recherchenbericht wurde für alle Patentansprüche erstellt --

| Recherchenort | Abschlußdatum der Recherche | Prüfer |
|---|---|---|
| DEN HAAG | 16-08-1989 | HERYET C.D. |